# EUROPÄISCHE PATENTSCHRIFT

(11) **EP 0 606 085 B1**
(45) Veröffentlichungstag und Bekanntmachung des Hinweises auf die Patenterteilung: **06.03.1996**
(21) Anmeldenummer: 94100161.2
(22) Anmeldetag: 07.01.1994
(51) Int. Cl.: B62D 1/18

(54) **Klemmvorrichtung für eine einstellbare Lenksäule in einem Kraftfahrzeug**
Clamping device for adjustable steering column in a motor vehicle
Dispositif de serrage pour une colonne de direction réglable dans un véhicule automobile

(30) Priorität: 07.01.1993 DE 4300238
(43) Veröffentlichungstag der Anmeldung: 13.07.1994
(73) Patentinhaber: LEMFOERDER METALLWAREN AG., D-49441 Lemförde (DE)
(72) Erfinder: Grams, Kay-Uwe, D-49692 Cappeln (DE)
(74) Vertreter: Bruse, Willy Hans Heinrich

(56) Entgegenhaltungen:
- EP-A- 0 242 928
- DE-C- 3 920 783
- DE-C- 4 118 863

## Beschreibung

Die Erfindung bezieht sich auf eine Klemmvorrichtung für eine einstellbare Lenksäule in einem Kraftfahrzeug nach dem Oberbegriff des Patentanspruches 1.

Eine diese Gattungsmerkmale aufweisende Klemmvorrichtung ist aus DE 41 18 863 -C1- bekannt. Daraus ergibt sich ein Klemmechanismus für ein in einer Richtung senkrecht zur Längsrichtung der Lenksäule verstellbares Gehäuse, bei dem zwei Kippstifte außerhalb des Gehäuses und des Halters zwischen dem Bolzenbund und einer auf dem Bolzen drehbar abgestützten Handhabe angeordnet sind, so daß diese Handhabe bei der Klemmung Axialkraftkomponenten überträgt. Bei der Anordnung nach EP-B1-0 242 928 werden die Axialkräfte auf den Halter durch ein Nadellager übertragen, damit sie als Klemmkraft zwischen dem Halter und dem Gehäuse wirksam werden können. Das gegenüberliegende Bolzenende ist durch eine Mutter gegen axiale Verschiebung in Richtung zum Klemmechanismus festgelegt und kompensiert die Klemmkräfte in der Klemmstellung.

Es ist Aufgabe der Erfindung, eine Klemmvorrichtung dieser Gattung in der Wirkung zu verbessern und eine Vormontage einer wirksamen Klemmechanik mit großen Klemmkräften zu ermöglichen.

Die Erfindung löst diese Aufgabe durch Ausbildungsmerkmale nach dem Patentanspruch 1.

Bei einer solchen Anordnung ist weitestgehend eine Vormontage der Klemmechanik möglich. Deren Klemmstift bzw. die Klemmstifte und das gegen das Gehäuse wirksame Widerlager sowie das auf den Bolzen in axialer Richtung wirksame Widerlager werden als vormontierte Einheit ausgebildet, so daß bei der Montage im Kraftfahrzeug lediglich der Bolzen durch die Öffnungen der Schenkel des Halters und des Gehäuses sowie drehfest durch eine Handhabe gesteckt und am freien Ende durch eine aufschraubbare Mutter gesichert werden muß.

Eine bevorzugte Ausbildung der Erfindung sieht vor, daß der Stützring, gegen den sich das gehäuseseitige Widerlager abstützt, einen Anschlag für die Montage der auf dem Bolzen drehfest aufschiebbaren Handhabe bildet.

Die wesentlich kompliziertere Montage der Kippstifte in der Klemmechanik kann bereits unter Benutzung geeigneter Vorrichtungen in einem separaten Montageschritt erfolgen, so daß eine erhebliche Vereinfachung der Montage erreicht wird. Von besonderem Vorteil ist die Anordnung der Handhabe etwa in der Mitte zwischen den Schenkeln des Halters, so daß diese Handhabe an der Unterseite der Lenksäule in beliebiger Lage montiert werden und ein beliebiges Design aufweisen kann. Eine Klemmvorrichtung mit den Erfindungsmerkmalen ist kompakt zu bauen und ermöglicht hohe Klemmkräfte zur Fixierung der Lenksäule in einer eingestellten Position.

Bevorzugt wird eine Anordnung mit drei Kippstiften, die auf dem Umfang gleichmäßig verteilt zwischen dem Widerlager am Bolzenbund und dem gegen das Gehäuse wirksamen Widerlager angeordnet sind, so daß in der Klemmstellung eine statisch bestimmte und symmetrische Kräfteverteilung erreicht wird. Die drehfeste Kupplung der Handhabe kann einfach dadurch erreicht werden, daß die Handhabe mit einem definierten Querschnittsprofil in Drehrichtung formschlüssig und positioniert auf ein komplementäres Querschnittsprofil des Bolzens aufgesteckt ist. Dabei kann die Durchgangsöffnung der Handhabe in einem Metallteil angeordnet sein, welches seinerseits in einer Handhabe aus Kunststoff oder dergleichen festhaftend eingesetzt ist.

Auf der Zeichnung ist ein Ausführungsbeispiel der Erfindung schematisch dargestellt. Es zeigen:
- Figur 1: eine schematische Darstellung einer Verstelleinrichtung und einer Klemmechanik mit Schnitt durch die Handhabe,
- Figur 2: eine Ansicht entsprechend Figur 1 der eingebauten Klemmechanik und
- Figur 3: eine Ansicht der vormontierten Klemmechanik.

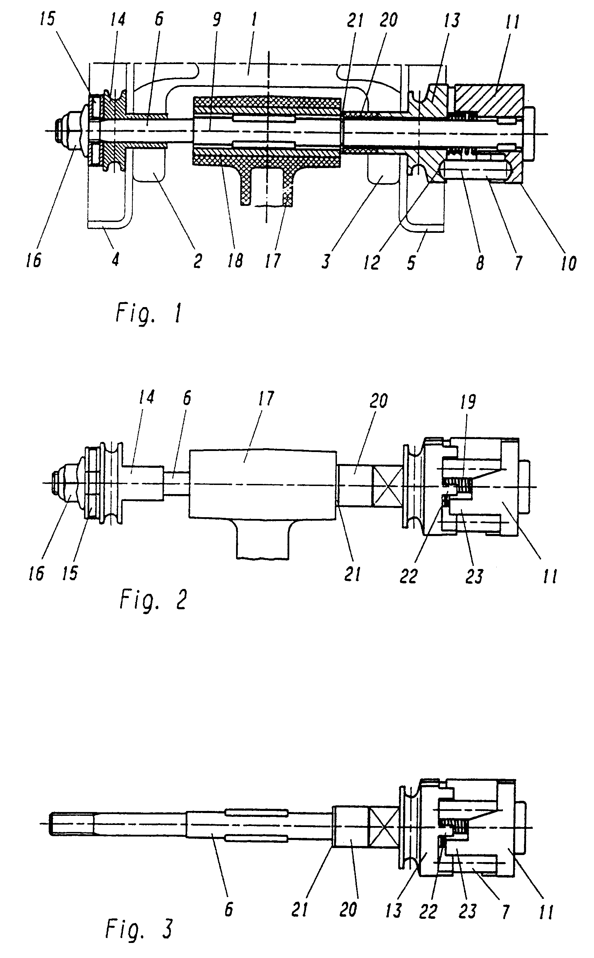

Zur Befestigung des oberen Endes einer verstellbaren Lenksäule ist an der auf der Zeichnung nicht dargestellten Karosserie eines Kraftfahrzeuges ein Halter 1 mit zwei sich etwa parallel zueinander erstreckenden Schenkeln 2 und 3 befestigt. Parallel zu den Schenkeln 2 und 3 des Halters 1 erstrecken sich Befestigungsschenkel 4 und 5 des verstellbaren Gehäuses der Lenksäule. Die Verbindung der Schenkel 2 und 3 des Halters 1 und der Schenkel 4 und 5 des Gehäuses erfolgt durch einen sich etwa horizontal und quer zur Längsachse der Lenksäule erstreckenden Bolzen 6, welcher konzentrische Öffnungen in den Schenkeln 2 und 3 bzw. 4 und 5 durchsetzt. An dem einen Bolzenende ist außerhalb der Schenkel 3 bzw. 5 die Klemmechanik angeordnet. Sie besteht aus wenigstens einem Klemmstift 7, vorteilhaft jedoch drei auf dem Umfang gleichmäßig verteilt angeordneten Klemmstiften 7, die mit ihrer Längsachse 8 etwa parallel zur Achse 9 des Bolzens 6 angeordnet sind. Das eine Ende jedes Klemmstiftes 7 stützt sich in einem Widerlager 10 an einem mit dem Bolzen 6 fest verbundenen Bund 11 ab. Das Widerlager 12 für das andere Ende des Kippstiftes 7 ist in einem axial beweglich auf dem Bolzen 6 angeordneten Druckring 13 angeordnet, der axial gegen den Schenkel 5 des Gehäuses wirkt und dadurch Axialkräfte auf den Schenkel 3 des Halters 1 überträgt, und dadurch in der Klemmstellung die aneinanderliegenden Reibflächen der Schenkel 3 und 5 zusammenpreßt. Auf das gegenüberliegende Ende des Bolzens 6 ist ebenfalls ein Druckring 14 aufgesteckt, der in der Klemmstellung Axialkräfte wirksam werden läßt, durch die Reibflächen zwischen dem Schenkel 2 des Halters 1 und dem Schenkel 4 des Gehäuses wirksam werden. Gegen die Außenseite dieses Druckringes 14 wird ein Nadellager 15 durch eine auf das Gewindeende des Bolzens 6 aufschraubbare Mutter 16 gedrückt, so daß die Mutter 16 eine spielfreie Einstellung der Klemmvorrichtung in der entspannten Lösestellung ermöglicht. In der Mitte zwischen den Schenkelpaaren 2, 4 bzw. 3,5 durchsetzt der Bolzen 6 die etwa mittig unterhalb der Lenksäule angeordnete Handhabe 17 beliebiger Gestaltung. Zur drehfesten Kupplung der Handhabe 17 mit dem Bolzen 6 ist das Querschnittsprofil der Durchgangsöffnung in der Handhabe und des Bolzens in diesem Bereich z.B. polygonal oder in anderer Weise komplementär figuriert. Besonders aus der Figur 1 ist erkennbar, daß die Elemente zur drehfesten Verbindung der Handhabe mit dem Bolzen in einem Metallteil 18 angeordnet sein können, welches festhaftend in eine Handhabe 17 aus Kunststoff oder dergleichen eingesetzt ist.

Der Bolzen 6 mit dem darauf an einem Ende befestigten Bund 11, das Widerlager 12 und die zwischen beiden durch die Feder 19 verspannten Kippstifte 7 bilden eine vormontierte Einheit, die ohne weitere Veränderung in die Fahrzeuglenksäule einbaubar ist. Dazu wird das Widerlager 12 auf dem Bolzen 6 durch einen Stützring 21 gehalten, gegen den sich das Widerlager 12 mittels einer Zwischenhülse 20 abstützt. Die Lage des Stützringes 21 wird durch die Montageposition der Handhabe 17 beim Einbau bestimmt, so daß der Stützring 21 gleichzeitig als Anschlag für die richtige Positionierung der Handhabe 17 auf dem Bolzen 6 dient.

In der axial entspannten Lösestellung der Handhabe gemäß Darstellung in Figur 3 schließt die Längsachse 8 der Kippstifte 7 mit der Längsachse 9 des Bolzens 6 einen spitzen Winkel ein, so daß bei einer Verschwenkung der Handhabe 17 in die Verriegelungsstellung eine Totpunktlage überwunden werden muß, in der die Achsen 8 und 9 parallel zueinander ausgerichtet sind. Eine Verschwenkung über diese Totpunktlage hinaus bewirkt, daß die Handhabe jenseits dieser Totpunktlage in eine sichere Anschlaglage gelangt. Die integrierten Anschläge 22 und 23 sind an dem Bolzenbund 11 bzw. am Widerlager 12 ausgebildet. In der Klemmechanik wird die Handhabe über die Totpunktlage hinaus zurückgeschwenkt, wobei die Lösestellung ebenfalls durch Anschläge gesichert sein kann. Eine sichere Lösung der Klemmechanik bewirkt die zwischen dem Bund 11 auf dem Bolzen 6 und dem Druckring 13 angeordnete Feder 19, durch die die Klemmechanik in die Anschlaglage der Lösestellung gedrückt wird.

### BEZUGSZEICHENLISTE:

- 1: Halter
- 2: Halterschenkel
- 3: Halterschenkel
- 4: Gehäuseschenkel
- 5: Gehäuseschenkel
- 6: Bolzen
- 7: Kippstift
- 8: Kippstiftachse
- 9: Bolzenachse
- 10: Widerlager
- 11: Bolzenbund
- 12: Widerlager
- 13: Druckring
- 14: Druckring
- 15: Axialwälzlager
- 16: Schraubenmutter
- 17: Handhabe
- 18: Metallhülse
- 19: Spreizfeder
- 20: Zwischenhülse
- 21: Stützring
- 22: Anschlag Druckring
- 23: Anschlag Bolzenbund

## Patentansprüche

1. Klemmvorrichtung für eine einstellbare Lenksäule in einem Kraftfahrzeug zur Verbindung eines die verstellbaren Elemente aufnehmenden Gehäuses mit einem an der Karosserie festen Halter (1), die mit Reibflächen aneinanderliegen, bestehend aus einem Öffnungen in zwei zueinander parallelen Schenkeln (2-5) des Halters (1) und des Gehäuses in etwa horizontaler Richtung im Bereich der Reibflächen durchdringenden und mittels einer zwischen den Schenkeln des Halters angeordneten Handhabe (17) um seine Längsachse verdrehbaren, gegen axiale Verschiebung festgelegten Bolzen (6) und aus wenigstens einem mit seiner Längsachse etwa parallel zur Bolzenachse (9) angeordneten Kippstift (7), welcher sich mit dem einen Ende in einem Widerlager (12) am Gehäuse und mit seinem anderen Ende in einem Widerlager (10) an einem Bolzenbund (11) abstützt und welcher durch eine Bolzenverdrehung einerseits über die axiale Strecklage parallel zur Bolzenachse hinaus in eine arretierende Anschlaglage sowie in Gegenrichtung in eine die Klemmverbindung aufhebende Lösestellung kippbar ist, dadurch gekennzeichnet, daß das Widerlager (12) des Kippstiftes (7) am Gehäuse und das Widerlager (10) des Kippstiftes (7) am Bolzenbund (11) zusammen mit dem Kippstift (7) und einer die beiden Widerlager (10,12) des Kippstiftes (7) spreizenden Feder (19) als eine Einheit auf dem Bolzen (6) vormontiert sind, wobei das gehäuseseitige Widerlager (12) sich gegen einen bei der Vormontage auf dem Bolzen (6) fixierten Stützring (21) abstützt.

2. Klemmvorrichtung nach Anspruch 1, dadurch gekennzeichnet, daß der Stützring (21), gegen den sich das gehäuseseitige Widerlager (12) abstützt, einen Anschlag für die Montage der auf dem Bolzen (6) drehfest aufschiebbaren Handhabe (17) bildet.

3. Klemmvorrichtung nach den Ansprüchen 1 und 2, dadurch gekennzeichnet, daß zwischen dem gehäuseseitigen Widerlager (12) und dem Stützring (21) eine Zwischenhülse (20) auf dem Bolzen (6) angeordnet ist.

4. Klemmvorrichtung nach den Ansprüchen 1 bis 3, dadurch gekennzeichnet, daß das andere, der vormontierten Kippstiftanordnung gegenüberliegende Bolzenende sich mit einem Axialwälzlager (15) gegen eine in die Gehäuseöffnung eingreifende Druckscheibe (14) abstützt.

5. Klemmvorrichtung nach den Ansprüchen 1 bis 4, dadurch gekennzeichnet, daß die Handhabe (17) mit einem polygonalen Querschnittsprofil einer Durchgangsöffnung auf ein komplementäres Querschnittsprofil des Bolzens (6) drehfest aufgesteckt ist.

6. Klemmvorrichtung nach einem oder mehreren der Ansprüche 1 bis 5, dadurch gekennzeichnet, daß drei Kippstifte (7) in einer auf dem Umfang gleichmäßig verteilten Anordnung vorgesehen sind.

## Claims

1. Clamping device for an adjustable steering column in a motor vehicle, for connecting a casing accommodating the movable elements to a holder (1) integral with the vehicle body, which casing and holder rest against one another by means of friction surfaces, and consisting of a bolt (6) which passes througn apertures in two mutually parallel sidepieces (2 - 5) of the holder (1) and of the casing in an approximately horizontal direction in the region of the friction surfaces, is twistable about its longitudinal axis by means of a handle (17) disposed between the sidepieces of the holder, and is secured in position against axial displacement, and of at least one tipping pin (7) which is disposed with its longitudinal axis approximately parallel to the axis (9) of the bolt, is supported by one end in an abutment (12) on the casing and by its other end in an abutment (10) on a bolt collar (11), and can be tipped by torsion of the bolt, on the one hand beyond the axial position of extension parallel to the axis of the bolt and into a locking stop position, and also in the opposite direction into a releasing position cancelling the clamping connection, characterized in that the abutment (12) for the tipping pin (7) on the casing and the abutment (10) for the tipping pin (7) on the bolt collar (11) are pre-assembled, together with the tipping pin (7) and a spring (19) spreading apart the two abutments (10, 12) for the tipping pin (7), as one unit on the bolt (6), the abutment (12) on the casing side being supported against a supporting ring (21) fixed on the bolt (6) during pre-assembly.

2. Clamping device according to claim 1, characterized in that the supporting ring (21) against which the abutment (12) on the casing side is supported, forms a stop for the assembly of the handle (17) which can be pushed on, in a rotationally fixed manner, to the bolt (6).

3. Clamping device according to claims 1 and 2, characterized in that an intermediate sleeve (20) is disposed on the bolt (6), between the abutment (12) on the casing side and the supporting ring (21).

4. Clamping device according to claims 1 to 3, characterized in that the other end of the bolt, which is the opposite end in relation to the pre-assembled tipping pin arrangement, is supported by means of an axial roller bearing (15) against a thrust washer (14) engaging in the aperture in the casing.

5. Clamping device according to claims 1 to 4, characterized in that the handle (17) is slipped on, by means of a polygonal cross-sectional profile in a through aperture, to a complementary cross-sectional profile on the bolt (6) in a rotationally fixed manner.

6. Clamping device according to one or more of claims 1 to 5, characterized in that three tipping pins (7) are provided in an arrangement distributed uniformly over the periphery.

## Revendications

1. Dispositif de serrage pour une colonne de direction réglable dans un véhicule automobile pour la liaison d'un boîtier contenant les éléments réglables avec un support (1) fixé à la carrosserie, en contact mutuel par des surfaces de frottement, composé d'un tourillon (6) traversant des ouvertures dans deux branches (2-5) de la fixation (1) parallèles l'une à l'autre et dans le boîtier au niveau des surfaces de frottement dans une direction à peu prés horizontale et qui au moyen d'une prise (17) agencée entre les branches de la fixation peut être tourné autour de son axe longitudinal et est assuré contre une translation axiale et au moins d'une broche basculante (7), s'étendant avec son axe longitudinal à peu près parallèle à l'axe du tourillon (9), qui s'appuie avec une extrémité dans un palier de butée (12) agencé sur le boîtier et avec son autre extrémité dans un palier de butée (10) agencé sur un collet de butée (11), basculant au moyen d'une rotation du tourillon d'un côté dans une position de butée d'arrêt au delà de la position d'extension axiale parallèle à l'axe du tourillon ainsi que dans une position de desserrage en direction opposée, soulevant la liaison de serrage caractérisé en ce que,
le palier de butée (12) de la broche basculante (7) agencé sur le boîtier et le palier de butée (10) de la broche basculante (7) agencé sur le collet de butée (11) sont assemblés en tant qu'unité sur le tourillon (6) ensemble avec la broche basculante (7) et un ressort (19) écartant les deux paliers de butée (10, 12) de la broche basculante (7), et le palier de butée (12) du côté du boîtier s'appuie contre une bague d'appui (21) fixée sur le tourillon (6) lors du pré-montage.

2. Dispositif de serrage selon la revendication 1, caractérisé en ce que la bague d'appui (21), contre laquelle s'appuie le palier de butée (12) agencé sur le côté du boîtier, forme une butée pour le montage de la prise (17) coulissante et fixe en rotation sur le tourillon (6).

3. Dispositif de serrage selon la revendication 1 et 2, caractérisé en ce qu'une douille intermédiaire (20) est agencée sur le tourillon (6) entre le palier de butée (12) agencé sur le côté du boîtier et la bague d'appui (21).

4. Dispositif de serrage selon la revendication 1 à 3, caractérisé en ce que l'autre extrémité du tourillon du côté opposé du dispositif de broche basculante prémonté s'appuie par un palier à roulement axial (15) contre un disque de pression (14) s'avançant dans l'ouverture du boîtier.

5. Dispositif de serrage selon les revendications 1 à 4, caractérisé en ce que la prise (17) est montée fixe en rotation au moyen d'une ouverture de passage ayant un profil de section transversale polygonale sur un profil de section transversale complémentaire du tourillon (6).

6. Dispositif de serrage selon une quelconque des revendications, caractérisé en ce que sont prévues trois broches basculantes (7) réparties régulièrement sur la circonférence.
